# EUROPÄISCHE PATENTSCHRIFT

(11) **EP 0 832 053 B1**
(45) Veröffentlichungstag und Bekanntmachung des Hinweises auf die Patenterteilung: **14.04.1999**
(21) Anmeldenummer: 96920774.5
(22) Anmeldetag: 03.06.1996
(51) Int. Cl.: C05G 3/00

(54) **UMHÜLLTE DÜNGEMITTELGRANULATE**
ENCAPSULATED FERTILISER GRANULATES
ENGRAIS SOUS FORME DE GRANULES ENROBES

(30) Priorität: 13.06.1995 DE 19521502
(43) Veröffentlichungstag der Anmeldung: 01.04.1998
(73) Patentinhaber: BASF AKTIENGESELLSCHAFT, 67056 Ludwigshafen (DE)
(72) Erfinder: HORCHLER VON LOCQUENGHIEN, Klaus, D-67117 Limburgerhof (DE); ENGELHARDT, Karl, D-82054 Sauerlach (DE); KLEINBACH, Eberhard, D-67061 Ludwigshafen (DE); MÜLLER, Michael, Wolfgang, D-68647 Biblis (DE)
(86) Internationale Anmeldenummer: EP9602390
(87) Internationale Veröffentlichungsnummer: WO9641779

(56) Entgegenhaltungen:
- EP-A- 0 224 990
- EP-A- 0 337 298
- WO-A-92/14690
- DATABASE WPI Section Ch, Week 9517 Derwent Publications Ltd., London, GB; Class A17, AN 95-126054 XP002013280 & JP,A,07 048 194 (CHISSO CORP) , 21.Februar 1995

## Beschreibung

Die vorliegende Erfindung betrifft neue umhüllte Düngemittelgranulate, welche mit einem Carboxylgruppen-tragenden Ethylencopolymerisat, bei dem die Carboxylgruppen auch in Form ihrer Alkali-, Erdalkali-, Ammoniumsalze vorliegen können, umhüllt sind, wobei das Carboxylgruppen-tragende Ethylencopolymerisat aufgebaut ist aus
a) 75 bis 90 Gew.-% Ethylen und
b) 10 bis 25 Gew.-% einer α-olefinisch ungesättigten C₃- bis C₈-Alkylcarbonsäure
und wobei solche umhüllten Düngemittelgranulate, die einen Pflanzenschutz-Wirkstoff enthalten, ausgenommen sind. Weiterhin betrifft die Erfindung ein Verfahren zu deren Herstellung, sowie Düngeverfahren, bei denen die erfindungsgemäßen umhüllten Düngemittelgranulate Verwendung finden.

Es ist allgemein bekannt, als Düngemittel Düngemittelgranulate einzusetzen, die mit einer wasserundurchlässigen Schicht eines Polymeren umhüllt sind. Durch die Umhüllung wird die Effizienz dieser Düngemittel gesteigert, weil das umhüllte Düngemittel die den Pflanzen als Nährstoffe dienenden Stoffe zeitlich verzögert freisetzt und es so über einen langen Zeitraum seine Wirkung entfalten kann. Derartige slow-release-Düngemittel sind z.B. in Ullmann's Encyclopädia of Industrial Chemistry, 5. Auflage 1987, Band A 10, Seiten 363 bis 369 beschrieben und deren Vorteile sind in Fert. Res. von 1993, Band 35, Seiten 1 bis 12 zusammengefaßt.

Aus der US-A-4 851 027 ist es bekannt, zur Beschichtung der Düngemittelgranulate wässerige Dispersionen einzusetzen, die ein Polymer enthalten, das eine Glastemperatur von 60°C und mehr aufweist. Als Monomere, die zur Herstellung dieser Polymere geeignet sind, wird eine Vielzahl von Monomeren, u.a. auch Ethylen und ungesättigte Carbonsäuren wie Acrylsäure und Methacrylsäure benannt.

Es findet sich kein konkreter Hinweis auf die Verwendung von Copolymeren aus Ethylen und olefinisch ungesättigten Carbonsäuren als Hüllpolymere.

In der EP-A-337 298 wird empfohlen, als Hüllpolymere für die Umhüllung von Düngemittelgranulaten Copolymere aus Ethylen, Vinylchlorid und wenigstens einem Monomer aus der Gruppe Acrylamid, Methacrylamid, N-Methylolacrylamid, N-Butoxymethacrylamide, Acrylsäure, Glycidylmethacrylat und Hydroxyethylacrylat einzusetzen.

In der japanischen Offenlegungsschrift 71 698/87 sind umhüllte Düngemittelgranulate bekannt, die durch Aufbringen einer Lösung oder einer Dispersion eines Ethylen-Acrylsäure-Copolymerisates, bei der das Lösungsmittel bzw. die kohärente Phase ein organisches Lösungsmittel, z.B. ein Kohlenwasserstoff ist, hergestellt werden.

An die umhüllten Düngemittelgranulate werden verschiedenerlei Anforderungen bezüglich einfacher und wirtschaftlicher Herstellbarkeit sowie deren anwendungstechnischen Eigenschaften gestellt.

Die Polymere sollen sich ohne Verwendung von organischen Lösungsmitteln auf das Düngemittelgranulat aufbringen lassen. Weiterhin soll die Polymermenge, die zur Umhüllung des Granulates benötigt wird, um eine ausreichende Retardwirkung zu erzielen, möglichst gering sein.

Daneben sollen die umhüllten Düngemittelgranulate nicht zum Verkleben neigen, insbesondere bei Temperaturen, wie sie üblicherweise bei ihrer Lagerung oder beim Transport auftreten, ohne daß hierzu besondere Vorkehrungen erforderlich wären. Andererseits dürfen die Hüllpolymere keine zu hohe Härte und Sprödigkeit aufweisen, da die Hüllen sonst bei mechanischer Beanspruchung der umhüllten Düngemittelgranulate, wie sie beispielsweise beim Umfüllen oder Verstreuen auf dem Ackerboden auftreten, beschädigt werden, oder gar abplatzen.

Umhüllte Düngemittelgranulate, die dieses komplexe Anforderungsprofil erfüllen, sind bisher nicht bekannt geworden. Lediglich in den nicht vorveröffentlichten deutschen Patentanmeldungen mit dem Aktenzeichen P 43 43 176.2 sind umhüllte Düngemittelgranulate beschrieben, die ein Pflanzenschutzmittel enthalten und deren Hülle aus einem Polymer besteht, das aus 75 bis 90 gew.-% Ethylen und 10 bis 25 Gew.-% einer α-olefinischen ungesättigten Mono- oder Dicarbonsäure aufgebaut ist.

Die Aufgabe der vorliegenden Erfindung war es deshalb, ein umhülltes Düngemittelgranulat bereitzustellen, das das vorgenannte Anforderungsprofil erfüllt.

Demgemäß wurden die eingangs definierten umhüllten Düngemittel gefunden. Weiterhin wurden Verfahren zu deren Herstellung sowie Düngeverfahren, bei dem diese umhüllten Düngemittel verwendet werden, gefunden.

Geeignete Düngemittelausgangsgranulate, die sich für die Umhüllung eignen, sind allgemein bekannte Granulate von organischen oder mineralischen Düngemitteln, wie sie beispielsweise in Ullmann's Encyclopädie of Industrial Chemistry, 5.Auflage 1987, Band A 10, Seiten 323 bis 431 (s. insbesondere Kapitel 2.1 und 4) beschrieben sind.

Es kommen beispielsweise Einzel- als auch Mehrnährstoffdünger in Betracht, die einzeln bzw. ggf. in Kombination Nährstoffe wie Stickstoff, Kali oder Phosphor in Form ihrer Salze enthalten. Beispiele hierfür sind NP-, NK-, PK- sowie NPK-Dünger wie Kalkammonsalpeter, Ammonsulfat, Ammonsulfatsalpeter sowie Harnstoff.

Ferner können auch Düngemittelausgangsgranulate eingesetzt werden, die neben den genannten Hauptbestandteilen noch Salze von Mg, Fe, Mn, Cu, Zu, Mo und/oder B in untergeordneten Mengen, d.h. üblicherweise in Mengen von 0,5 bis 5 Gew.-% enthalten.

Der längste mittlere Durchmesser der Düngenmittelausgangsgranulate beträgt im allgemeinen 0,5 bis 10, bevorzugt 0,7 bis 5 mm. Ihr Schüttgewicht liegt üblicherweise bei 0,5 bis 1,3 kg/l. Die Umhüllung besteht aus einem Carboxylgruppen-tragenden Ethylencopolymerisat, bei dem die Carboxylgruppen auch ganz oder teilweise in Form ihrer Salze, bevorzugt der Zink-, Alkali-, Erdalkali- oder Ammoniumsalze vorliegen können, wobei die Natrium- oder Ammoniumsalze besonders bevorzugt sind.

Als Ammoniumsalze kommen insbesondere solche in Betracht, die sich von Ammoniak, einen Mono-, Di- oder Trialkanolamin mit jeweils 2 bis 18 C-Atomen im Hydroxyalkylrest, bevorzugt 2 bis 6 C-Atomen, oder Mischungen der genannten Alkanolamine oder einem Dialkyl-monoalkanolamin mit jeweils 2 bis 8 C-Atomen im Alkyl- und Hydroxyalkylrest oder ihren Mischungen ableiten. Beispiele hierfür sind Diethanolamin, Triethanolamin, 2-Amino-2-methylpropanol-(1) oder Dimethylethanolamin.

Bevorzugt liegen 40 bis 100, besonders bevorzugt 70 bis 90 % der Carboxylgruppen in Form ihrer Salze vor.

Das Carboxylgruppen-tragende Ethylencopolymer ist aufgebaut aus
a) 70 bis 90, bevorzugt 75 bis 85 Gew.-% Ethylen und
b) 10 bis 30, bevorzugt 15 bis 25 Gew.-% einer α-olefinisch ungesättigten C3- bis C₈-Alkylcarbonsäure.

Geeignete Monomere (b) sind insbesondere Acrylsäure, Methacrylsäure, Crotonsäure, Maleinsäure, Fumarsäure oder Itaconsäure sowie Gemische dieser Säuren.

Bevorzugt weisen die Carboxylgruppen-tragenden Ethylencopolymerisate einen Schmelzindex (MFI) von 1 bis 25, besonders bevorzugt 5, von 8 bis 15 (gemessen bei 160°C und 325 Kp) auf.

Der MFI gibt die Menge der Polymerisatschmelze in Gramm an, die bei einer bestimmten Temperatur und Zeit durch eine Düse von bestimmten Abmessungen bei einem bestimmten Kraftaufwand (Belastung) gedrückt werden kann. Die Bestimmung der Schmelzindices (MFI-Einheiten) erfolgt analog den Normvorschriften, ASTM D 1238-65 T, ISO R 1133-1696 (E) oder DIN 53 735 (1970), die untereinander identisch sind.

Bevorzugt weisen die Carboxylgruppen-tragenden Ethylencopolymerisate einen Schmelzbereich auf, dessen Schmelzende (T_{SE}) oberhalb von 80°C, bevorzugt oberhalb von 110°C liegt. Das T_{SE} liegt im allgemeinen nicht höher als 200°C. Das T_{SE} läßt sich beispielsweise nach der Methode der Differential Scanning Calorimetry (DSC) ermitteln, wobei üblicherweise nach der Vorschrift der DIN 53765 gearbeitet wird.

Die Carboxygruppen-tragenden Ethylencopolymerisate weisen ferner bevorzugt eine Glastemperatur (T_{G}) von unterhalb 50°C, bevorzugt von -20 bis +20°C auf und keine Glastemperatur oberhalb von 50°C. Die T_{G} wird üblicherweise ebenfalls nach der DSC-Methode nach der DIN 53765 ermittelt.

Der Anteil des Carboxylgruppen-tragenden Ethylencopolymerisates an der Gesamtmenge des umhüllten Düngemittelgranulats beträgt im allgemeinen 0,5 bis 15, bevorzugt 2 bis 10 Gew.-%.

Die erfindungsgemäßen umhüllten Düngemittelgranulaten werden im allgemeinen hergestellt, indem man eine wässerige Lösung oder eine wässerige Dispersionen oder Carboxylgruppen-tragenden Ethylencopolymere auf ein Düngemittelausgangsgranulat aufbringt.

Geeignete wässerige Dispersionen sind beispielsweise die in der DE-A-34 20 168 beschriebenen wässerigen Dispersionen von Ethylencopolymerisat-Wachsen, die hiermit vollständig einbezogen ist.

Bevorzugt enthalten die wässerigen Dispersionen 5 bis 45, bevorzugt 10 bis 30 Gew.-% der Carboxylgruppen-tragenden Ethylencopolymere in dispergierter Form.

Den Lösungen bzw. Dispersionen können zusätzlich Substanzen, die der Steuerung der Freisetzung der Düngemittel dienen, zugesetzt werden. Dies sind vor allem Substanzen wie Lignin, Stärke und Cellulosen. Deren Menge beträgt beispielsweise 0,1 bis 5 Gew.-%, vorzugsweise 0,1 bis 3 Gew.-%, bezogen auf die Hüllsubstanz.

Das Aufbringen der Lösungen bzw. Dispersionen der Carboxylgruppen-tragenden Ethylencopolymerisate erfolgt zweckmäßigerweise durch Aufsprühen bei einer Temperatur von im allgemeinen 10°C bis 110°C.

Um zu vermeiden, daß das Düngemittelausgangsgranulat bei Verwendung einer wässerigen Dispersion bzw. Lösung bei dessen Aufbringen angelöst wird, bringt man pro Zeiteinheit nur eine begrenzte Menge der Lösung bzw. Dispersion auf, und sorgt dafür, daß das Wasser rasch verdunsten kann.

Zweckmäßigerweise geht man dabei so vor, daß man eine Wirbelschicht, die man durch Aufwirbeln der Ausgangsdüngemittelgranulats mit einem Wirbelgas erzeugt, bei einer Temperatur von 10 bis 110 °C, bevorzugt 30 bis 70°C, mit den Lösungen bzw. Dispersionen besprüht. Nach dem Aufsprühen der Lösungen bzw. Dispersionen wird die Wirbelschicht im allgemeinen so lange aufrecht erhalten, bis das Lösungsmittel bzw. das Dispergiermedium verdunstet ist.

Derartige Wirbelschicht-Auftragsverfahren sind allgemein bekannt und für die Herstellung von umhüllten Düngemittelgranulaten in der US-A-5 211 985 beschrieben. Mit diesen Verfahren lassen sich besonders gleichmäßige und dünne Hüllen erzeugen.

Um die Neigung der umhüllten Düngemittelgranulate zum Verkleben und Verbacken zusätzlich zu verringern, bringt man gegebenenfalls im Anschluß an die Umhüllung der Granulate mit den Carboxylgruppen-tragenden Ethylencopolymerisaten vorteilhafterweise pulverförmige Feststoffe wie Talkum, SiO₂, Al₂O₃ oder TiO₂ auf.

Die umhüllten Düngemittelgranulate enthalten keine wirksamen Mengen an Pflanzenschutz-Wirkstoffen, z.B. fungiziden Pflanzenschutz-Wirkstoffen.

Die umhüllten Düngemittelgranulate werden gegebenenfalls zusammen mit Nitrifikationsinhibitoren oder Wachstumsregulatoren nach üblichen Verfahren auf den Ackerboden aufgebracht, wo sie das Düngemittel über einen längeren Zeitraum hinweg in einer für die Pflanzen verfügbaren Form freisetzen. Die Düngemittelgranulate zeichnen sich insbesondere dadurch aus, daß sie selbst bei erhöhter Temperatur vergleichsweise wenig zum Verkleben und Verbacken neigen und ihre Hülle unempfindlich gegen mechanische Beanspruchungen sind, wie sie typischerweise beim Umfüllen und Transport auftreten.

### Beispiele

### Herstellung der umhüllten Düngemittelgranulate

In einem handelsüblichen Wirbelbettcoater (z.B. Multiprozessor MP 1 der Fa. Aeromatic, 4416 Bubendorf, Schweiz; Kugelcoater HKC-5 der Fa. Hüttlin, 79585 Steinen, Deutschland) wurden die Düngemittelgranulate mit vorgewärmter Luft fluidisiert und auf die gewünschte Temperatur erwärmt. Durch in den Apparaten vorhandene Düsen wurden die jeweiligen wässerigen Polymerdispersionen aufgedüst und dadurch die Granulate mit einem Polymerfilm überzogen. Die Sprührate wurde so gewählt, daß ein Anlösen des Düngers vermieden wurde. Nach Beendigung des Aufsprühens wurde das Produkt noch einige Minuten im Wirbelbett getrocknet. Durch Variation der Menge an Hüllmaterial konnte die Freisetzungsrate der Nährstoffe und damit die gewünschte Wirkungsdauer des Düngemittels eingestellt werden (vgl. Bsp. 12).

Die Zusammensetzung der eingesetzten Düngemittelgranulate ergibt sich aus der bei den Beispielen in Klammern angegebenen Zahlenkombinationen:

| | | |
|---|---|---|
| 1. | Zahl | Stickstoff, angegeben ist die entsprechende N₂-Gewichtsmenge |
| 2. | Zahl | Phosphor, angegeben ist die entsprechende P₂O₅-Gewichtsmenge |
| 3. | Zahl | Kalium, angegeben ist die entsprechende K₂O-Gewichtsmenge |
| 4. | Zahl | Magnesium, angegeben ist die entsprechende MgO-Gewichtsmenge |

Der Dünger Nitrophoska® Perfekt (15+5+20+2) enthält also Stickstoff, Phosphor, Kalium und Magnesium in den gleichen Mengenverhältnissen wie ein Düngemittelgemisch aus 15 Teilen N, 5 Teilen P₂O₅, 20 Teilen K₂O und 2 Teilen MgO

### Untersuchung der Retardwirkung

10 g des jeweiligen umhüllten Düngemittelgranulates wurden kontinuierlich mit Wasser extrahiert. Hierzu wurde das Granulat schichtförmig in einem mit Wasser gefüllten zylinderförmigen Glasgefäß so angeordnet, daß es vollständig von Wasser umgeben war. Dieser Granulatschicht wurde Wasser mit einer Strömungsgeschwindigkeit von 1 ml/min geleitet und das durch diese Schicht geleitete Wasser dem Gefäß entnommen und sein Stickstoffgehalt analysiert. Aus der entnommenen Wassermenge und seinem Gehalt an Stickstoffe wurde die Gesamtmenge an Düngemittel berechnet, die nach einer bestimmten Zug aus dem Granulat extrahiert worden war. Diese Menge wurde jeweils als "N-Auslaugrate" angegeben.

### Beispiel 1

| | | |
|---|---|---|
| Düngemittelgranulat | Art | Nitrophoska® Perfekt (15+5+20+2) hergestellt durch BASF |
| | Menge | 3860 g |
| | | |
| Polymerdispersion | Art | Wachsdispersion Poligen® WE3 mit einem Gehalt von 25 Gew.-% eines Ethylen-Acrylsäure-Copolymerisates aus 20 Gew.-% Acrylsäure und 80 Gew.-% Ethylen, 3.68 Gew.-% Ammoniaklösung (25 Gew.-%ig), 0.20 Gew.-% Na₂S₂O₅ und 71.32 Gew.-% Wasser T_{G}= 0°C T_{SE}= 115°C |
| | Menge | 560 g + 140 g Wasser |
| | | |
| Prozeßtemperatur | | 47°C |
| Prozeßzeit | | 60 min |
| | | |
| Hüllmenge bzgn. auf Fertigprodukt : | | 3,5 % |
| N-Auslaugrate | nach 24 h: | 4,8 % |
| | nach 7 d: | 31,1 % |

### Beispiel 2

| | | |
|---|---|---|
| Düngemittelgranulat | Art | granuliertes Diammoniumphosphat (DAP 18+46) von Int. Ore and Fertilizer Belgium S.A., Brüssel |
| | Menge | 4700 g |
| | | |
| Polymerdispersion | Art | wie in Bsp. 1 |
| | Menge | 1200 g+300g Wasser |
| | | |
| Prozeßtemperatur | | 42°C |
| Prozeßzeit | | 60 min |
| | | |
| Hüllmenge bzgn. auf Fertigprodukt: | | 6 % |
| N-Auslaugrate | nach 24 h: | 13,5 % |
| | nach 7 d: | 50,1 % |

### Beispiel 3

| | | |
|---|---|---|
| Düngemittelgranulat | Art | granuliert Harnstoff der Fa. Agrimont, Italien |
| | Menge | 2850 g |
| | | |
| Polymerdispersion | Art | wie in Bsp. 1 |
| | Menge | 600 g |
| | | |
| Prozeßtemperatur | | 45°C |
| Prozeßzeit | | 55 min |
| | | |
| Hüllmenge bzgn. auf Fertigprodukt: | | 5 % |
| N-Auslaugrate | nach 24 h: | 14,0 % |
| | nach 7 d: | 47,8 % |

### Beispiel 4

| | | |
|---|---|---|
| Düngemittelgranulat | Art | Harnstoff-haltiger NPK Dünger (16+10+19+2) mit 35 % Harnstoff, hergestellt bei BASF |
| | Menge | 3800 g |
| | | |
| Polymerdispersion | Art | wie in Bsp. 1 |
| | Menge | 800 g |
| | | |
| Prozeßtemperatur | | 45°C |
| Prozeßzeit | | 82 min |
| | | |
| Hüllmenge bzgn. auf Fertigprodukt: | | 5 % |
| N-Auslaugrate | nach 24 h: | 4,6 % |
| | nach 4 d: | 14,5 % |

### Vergleichsbeispiel 5

| | | |
|---|---|---|
| Düngemittelgranulat | Art | Nitrophoska® Perfekt (15+5+20+2) hergestellt durch BASF |
| | Menge | 1850 g |
| | | |
| Polymerdispersion | Art | wässerige Dispersion mit einem Gehalt von 50 Gew.-% eines Copolymers aus Styrol, Acrylnitril und Acrylsäure (Styrofan® 120 D der BASF) |
| | Menge | 300 g |
| | | |
| Prozeßtemperatur | | 38°C |
| Prozeßzeit | | 53 min |
| | | |
| Hüllmenge bzgn. auf Fertigprodukt: | | 15 % |
| N-Auslaugrate | nach 24 h: | 100 % (Hülle platzt ab) |

### Vergleichsbeispiel 6

| | | |
|---|---|---|
| Düngemittelgranulat | Art | Nitrophoska® Perfekt (15+5+20+2) hergestellt durch BASF |
| | Menge | 1850 g |
| | | |
| Polymerdispersion | Art | wässerige Dispersion mit einem Gehalt von 40 Gew.-% eines Copolymers aus 60 % Methylmethacrylat, 30 % n-Butylacrylat und 10 % Methacrylsäure (Acronal® A 969 der BASF) |
| | Menge | 375 g |
| | | |
| Prozeßtemperatur | | 38°C |
| Prozeßzeit | | 46 min |
| | | |
| Hüllmenge bzgn. auf Fertigprodukt: | | 15 % |
| N-Auslage | nach 24 h: | 100 % (Hülle platzt ab) |

### Vergleichsbeispiel 7

| | | |
|---|---|---|
| Düngemittelgranulat | Art | Nitrophoska Perfekt (12+12+17+2) hergestellt durch BASF |
| | Menge | 3487 g |
| | | |
| Polymerdispersion | Art | wässerige Dispersion mit einem Gehalt von 38 Gew.-% eines Polyethylens mit einem Molekulargewicht von ca. 18000 D (Poligen PE der BASF) T_{G}= -80°C T_{SE}> 100°C |
| | Menge | 513 g |
| | | |
| Prozeßtemperatur | | 67°C |
| Prozeßzeit | | 25 min |
| | | |
| Hüllmenge bzgn. auf Fertigprodukt: | | 5.5 % |
| N-Auslaugrate | nach 24 h: | 100 % |

### Vergleichsbeispiel 8

| | | |
|---|---|---|
| Düngemittelgranulat | Art | Nitrophoska Perfekt (15+5+20+2) hergestellt durch BASF |
| | Menge | 1850 g |
| | | |
| Polymerdispersion | Art | wässerige Dispersion mit einem Gehalt von 45 Gew.-% eines Copylymers auf Basis Styrol und Butylacrylat (Acronal 168 D der BASF) |
| | Menge | 334 g |
| | | |
| Prozeßtemperatur | | 40°C |
| Prozeßzeit | | 50 min |
| | | |
| Hüllmenge bzgn. auf Fertigprodukt: | | 15 % |
| N-Auslaugrate | nach 24 h: | 100 % |

### Vergleichsbeispiel 9

| | | |
|---|---|---|
| Düngemittelgranulat | Art | Nitrophoska Perfekt (15+5+20+2) hergestellt durch BASF |
| | Menge | 4000 g |
| | | |
| Polymerdispersion | Art | wässerige Dispersion mit einem Gehalt von 37 Gew.-% eines Copolymers auf Basis Styrol und Butylacrylat (Acronal 168 D der BASF) |
| | Menge | 545 g |
| | | |
| Prozeßtemperatur | | 69°C |
| Prozeßzeit | | nach kurzer Zeit verklebt das Produkt, Versuch wurde abgebrochen |

### Vergleichsbeispiel 10

| | | |
|---|---|---|
| Düngemittelgranulat | Art | granulierter Harnstoff der Fa. Agrimont, Italien |
| | Menge | 2080 g |
| | | |
| Polymerdispersion | Art | wässerige Dispersion mit einem Gehalt von 50 Gew.-% eines Copolymers aus 29 % Styrol und 71 % 1,3-Butadien (Butonal® LS 104 der BASF) |
| | Menge | 415 g |
| | | |
| Prozeßtemperatur | | 46°C |
| Prozeßzeit | | 50 min |
| | | |
| Hüllmenge bzgn. auf Fertigprodukt: | | 10 % |
| N-Auslaugrate | nach 24 h: | 100 % |

### Vergleichsbeispiel 11

| | | |
|---|---|---|
| Düngemittelgranulat | Art | granulierter Harnstoff der Fa. Agrimont, Italien |
| | Menge | 2550 g |
| | | |
| Polymerdispersion | Art | wässerige Dispersion mit einem Gehalt von 45 Gew.-% eines Copolymers aus 34 % 1.3-Butadien, 61 % Styrol, 3.5 % Acrylsäure und 1.5 % Acrylamid (Styrofan®) DS 2306 der BASF) |
| | Menge | 1000 g |
| | | |
| Prozeßtemperatur | | 45°C |
| Prozeßzeit | | 85 min |
| | | |
| Hüllmenge bzgn. auf | Fertigprodukt: | 15 % |
| N-Auslaugrate | nach 24 h: | 100 % |

### Beispiel 12

In diesem Beispiel wurde in einer Wirbelbettapparatur mit einem Bodenfläche von 520 cm² und einem Lochdurchmesser von 2.7 mm gearbeitet. Die Wirbelgasmenge betrug 2000 Nm³/h, die Düsengasmenge 38 Nm³/h. Während des Versuchs wurden Proben entnommen, sobald die aufgebrachte Hüllmenge 2.5 %, 3.0 %, 4.0 % und zum Schluß 5.0 % betrug.

| | | | | | |
|---|---|---|---|---|---|
| Düngemittelgranulat | Art | Nitrophoska® Perfekt (15+5+20+2) hergestellt durch BASF | | | |
| | Menge | 46000 g | | | |
| | | | | | |
| Polymerdispersion | Art Menge | wie in Bsp. 1 insgesamt 9200 g Dispersion 6130 g Wasser | | | |
| | | | | | |
| Prozeßtemperatur | | 40°C | | | |
| Prozeßzeit | | 70 min | | | |
| | | | | | |
| Hüllmenge bzgn. auf Fertigprodukt: | | 2.5 % | 3.0 % | 4.0 % | 5.0 % |
| N-Auslaugrate | nach 24 h: | 24.0 % | 14.5 % | 3.0 % | 1.8 % |
| | nach 7 d: | 68.8 % | 52.3 % | 31.8 % | 21.0 % |

Die T_{G} und das T_{SE} wurde mittels DSC nach DIN 53765 ermittelt.

## Patentansprüche

1. Umhüllte Düngemittelgranulate, welche mit einem Carboxylgruppen-tragenden Ethylencopolymerisat, bei dem die Carboxylgruppen auch in Form ihrer Salze vorliegen können, umhüllt sind, wobei das Carboxylgruppen-tragende Ethylencopolymerisat aufgebaut ist aus
a) 75 bis 90 Gew.-% Ethylen und
b) 10 bis 25 Gew.-% einer α-olefinisch ungesättigten C₃- bis C₈-Alkylcarbonsäure
und wobei solche umhüllten Düngemittelgranulate, die einen Pflanzenschutz-Wirkstoff enthalten, ausgenommen sind.

2. Umhüllte Düngemittelgranulate nach Anspruch 1, wobei das Carboxylgruppen-tragende Ethylencopolymerisat aus Acrylsäure und/oder Methacrylsäure als Monomer (b) aufgebaut ist.

3. Umhüllte Düngemittelgranulate nach Anspruch 1 oder 2, wobei das Carboxylgruppen-tragende Ethylencopolymerisat einen Schmelzindex von 1 bis 25 g/min aufweist.

4. Umhüllte Düngemittelgranulate nach den Ansprüchen 1 bis 3, wobei das Carboxylgruppen-tragende Ethylencopolymerisat einen Schmelzbereich aufweist, dessen Schmelzende (T_{SE}) oberhalb 80°C liegt.

5. Umhüllte Düngemittelgranulate nach den Ansprüchen 1 bis 4, wobei die Glastemperatur (T_{G}) unterhalb 50°C liegt.

6. Umhüllte Düngemittelgranulate nach den Ansprüchen 1 bis 5, wobei deren längster mittlerer Durchmesser 0,5 bis 10 mm beträgt.

7. Verfahren zur Herstellung von umhüllten Düngemittelgranulaten nach den Ansprüchen 1 bis 6, dadurch gekennzeichnet, daß man eine wässerige Dispersion eines Carboxylgruppen-tragenden Ethylencopolymerisats, bei dem in Carboxylgruppen auch in Form ihrer Alkali-, Erdalkali- oder Ammoniumsalze vorliegen können, wobei das carboxylgruppen-tragende Ethylencopolymerisat aufgebaut ist aus
a) 75 bis 90 Gew.-% Ethylen und
b) 10 bis 25 Gew.-% einer α-olefinisch ungesättigten C₃- bis C₈-Alkylcarbonsäure
auf ein Düngemittelausgangsgranulat aufbringt.

8. Verfahren nach Anspruch 7, dadurch gekennzeichnet, daß man eine Wirbelschicht, die man durch Aufwirbeln der Ausgangsdüngemittelgranulate mit einem Wirbelgas erzeugt, bei einer Temperatur von 10 bis 110°C mit einer wässerigen Dispersion, die das Carboxylgruppen-tragende Ethylencopolymerisat enthält, besprüht.

9. Verfahren nach Anspruch 7 oder 8, dadurch gekennzeichnet, daß man als Ausgangsdüngemittelgranulat mineralische oder organische Düngemittelgranulate mit einem längsten mittleren Durchmesser von 0,5 bis 10 mm einsetzt.

10. Düngeverfahren, dadurch gekennzeichnet, daß man die umhüllten Düngemittelgranulate nach den Ansprüchen 1 bis 6 auf den Ackerboden aufbringt.

## Claims

1. A coated fertilizer granule which is coated with a carboxyl-carrying ethylene copolymer in which the carboxyl groups may also be in the form of their salts, the carboxyl-carrying ethylene copolymer being composed of
a) from 75 to 90% by weight of ethylene and
b) from 10 to 25% by weight of an α-olefinically unsaturated C₃-C₈-alkanecarboxylic acid
and any coated fertilizer granule which contains an active ingredient for crop protection being excepted.

2. A coated fertilizer granule as claimed in claim 1, wherein the carboxyl-carrying ethylene copolymer is composed of acrylic acid or methacrylic acid, or of acrylic acid and methacrylic acid, as monomer (b).

3. A coated fertilizer granule as claimed in claim 1 or 2, wherein the carboxyl-carrying ethylene copolymer has a melt flow index of from 1 to 25 g/min.

4. A coated fertilizer granule as claimed in any of claims 1 to 3, wherein the carboxyl-carrying ethylene copolymer has a melting range whose final melting point (T_{FM}) is above 80°C.

5. A coated fertilizer granule as claimed in any of claims 1 to 4, wherein the glass transition temperature (T_{G}) is below 50°C.

6. A coated fertilizer granule as claimed in any of claims 1 to 5, whose longest average diameter is from 0.5 to 10 mm.

7. A process for the preparation of coated fertilizer granules as claimed in any of claims 1 to 6, wherein an aqueous dispersion of a carboxyl-carrying ethylene copolymer in which the carboxyl groups may also be in the form of their alkali metal, alkaline earth metal or ammonium salts, the carboxyl-carrying ethylene copolymer being composed of
a) from 75 to 90% by weight of ethylene and
b) from 10 to 25% by weight of an α-olefinically unsaturated C₃-C₈-alkanecarboxylic acid,
is applied to starting fertilizer granules.

8. A process as claimed in claim 7, wherein a fluidized bed which is produced by fluidizing the starting fertilizer granules by means of a fluidizing gas is sprayed with an aqueous dispersion containing the carboxyl-carrying ethylene copolymer at from 10 to 110°C.

9. A process as claimed in claim 7 or 8, wherein mineral or organic fertilizer granules having a longest average diameter of from 0.5 to 10 mm are used as starting fertilizer granules.

10. A fertilizer application method, wherein the coated fertilizer granules as claimed in any of claims 1 to 6 are applied to the arable land.

## Revendications

1. Granulés d'engrais enrobés, qui sont enrobés d'un copolymère d'éthylène porteur de groupes carboxyle, dans lequel les groupes carboxyle peuvent aussi se présenter sous la forme de leurs sels, le copolymère d'éthylène porteur de groupes carboxyle étant constitué de
a) 75 à 90% en poids d'éthylène, et
b) 10 à 25% en poids d'un acide C₃-C₈- alkylcarboxylique α-oléfiniquement insaturé,
les granulés d'engrais enrobés, qui contiennent une substance active phytosanitaire, étant exclus.

2. Granulés d'engrais enrobés suivant la revendication 1, dans lesquels le copolymère d'éthylène porteur de groupes carboxyle est constitué d'acide acrylique et/ou d'acide méthacrylique, comme monomère (b).

3. Granulés d'engrais enrobés, suivant une des revendications 1 et 2, dans lesquels le copolymère d'éthylène porteur de groupes carboxyle présente un indice de fusion de 1 à 25 g/min.

4. Granulés d'engrais enrobés, suivant l'une des revendications 1 à 3, dans lesquels le copolymère d'éthylène porteur de groupes carboxyle présente un intervalle de fusion dont la fin de fusion (T_{SE}) est située au-dessus de 80°C.

5. Granulés d'engrais enrobés, suivant l'une des revendications 1 à 4 dans lesquels la température de transition vitreuse (T_{G}) est inférieure à 50°C.

6. Granulés d'engrais enrobés, suivant l'une des revendications 1 à 5, dans lesquels le diamètre moyen maximal de ceux-ci est de 0,5 à 10 mm.

7. Procédé de préparation de granulés d'engrais enrobés, suivant l'une des revendications 1 à 6, caractérisé en ce que, sur un granulé d'engrais de départ, on applique une dispersion aqueuse d'un copolymère d'éthylène porteur de groupes carboxyle, dans lequel les groupes carboxyle peuvent aussi se présenter sous la forme de leurs sels de métal alcalin, de métal alcalino-terreux ou d'ammonium, le copolymère d'éthylène porteur de groupes carboxyle étant constitué de
a) 75 à 90% en poids d'éthylène, et
b) 10 à 25% en poids d'un acide C₃-C₈ alkylcarboxylique α - oléfiniquement insaturé.

8. Procédé suivant la revendication 7, caractérisé en ce que sur une couche fluidisée, qu'on produit par tourbillonnement des granulés d'engrais de départ à l'aide d'un gaz de tourbillonnement, on pulvérise une solution aqueuse, qui contient le copolymère d'éthylène porteur de groupes carboxyle, à une température de 10 à 110°C.

9. Procédé suivant l'une des revendications 7 et 8, caractérisé en ce qu'on met en oeuvre, comme granulés d'engrais de départ, des granulés d'engrais minéraux ou organiques ayant un diamètre moyen maximal de 0, 5 à 10 mm.

10. Procédé d'engraissage caractérisé en ce qu'on applique les granulés d'engrais enrobés suivant l'une des revendications 1 à 6 sur le sol de culture.
